(19) Europäisches Patentamt
European Patent Office
Office européen des brevets

(11) **EP 1 928 675 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(51) Int Cl.:
*B60G 17/0185* (2006.01)    *B60G 17/052* (2006.01)
*G01M 17/00* (2006.01)

(21) Anmeldenummer: **06778370.4**

(22) Anmeldetag: **28.08.2006**

(86) Internationale Anmeldenummer:
**PCT/EP2006/065713**

(87) Internationale Veröffentlichungsnummer:
**WO 2007/033884 (29.03.2007 Gazette 2007/13)**

(54) **VERFAHREN UND VORRICHTUNG ZUR ERKENNUNG VON LECKAGEN IN EINER KRAFTFAHRZEUG-LUFTFEDERANORDNUNG**

METHOD AND DEVICE FOR DETECTING LEAKS IN AN AIR SPRING ARRANGEMENT IN A MOTOR VEHICLE

PROCEDE ET DISPOSITIF DE DETECTION DE FUITES DANS UN SYSTEME D'AMORTISSEMENT PNEUMATIQUE D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.09.2005 DE 102005045269**

(43) Veröffentlichungstag der Anmeldung:
**11.06.2008 Patentblatt 2008/24**

(73) Patentinhaber: **Continental Aktiengesellschaft D-30165 Hannover (DE)**

(72) Erfinder: **STILLER, Alexander**
**30823 Garbsen (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
WO-A-20/05108129       DE-A1- 4 003 781
DE-A1- 10 300 737      DE-A1- 10 313 735
DE-A1- 19 515 895      DE-C1- 10 160 972

**Beschreibung**

Die vorliegende Erfindung betrifft ein Verfahren zur Erkennung von Leckagen in einer Kraftfahrzeug-Luftfederanordnung mit einer Niveauregeteinrichtung, die eine oder mehrere Luftfedern, Einrichtungen zum Ermitteln der Gesamtluftmenge in der Luftfederanordnung und Einrichtungen zum Temperaturerfassen aufweist. Die Erfindung betrifft feiner eine Vorrichtung zur Durchführung eines derartigen Verfahrens.

Luftfederanordnungen mit Niveauregeleinrichtungen sind in den verschiedensten Ausführungsformen bekannt. Aus der DE 40 03 781 A1ist beispielsweise eine Einrichtung zur Niveauregelung für ein Fahrzeug mit Luftfederung bekannt, bei der von Höhensensoren erfasste Niveau- bzw. Höhensignale mit einer Zeitkonstante gefiltert werden, um das Regelungsverhalten der Einrichtung zu verbessern. Eine Höhenänderung einer Luftfeder wird entweder durch eine Laständerung hervorgerufen oder durch eine Leckage in der Luftfeder verursacht.

Um bei den Regelungsvorgängen zu unterscheiden, ob eine Regelungsanforderung aufgrund eines geänderten Beladungszustandes oder aufgrund einer Leckage erfolgt, wird in der DE 103 00 737 A1 ein Verfahren zur Erkennung von Leckagen in einer Kraftfahrzeug-Luftfederanordnung mit einer Niveauregeleinrichtung beschrieben, bei der ein elektronisches Steuergerät Sensorsignale, die von den einzelnen Luftfedern zugeordneten Höhensensoren, mit mindestens einem Drucksensor empfangenen werden, zum Zwecke der Steuerung der Luftfeder-Ventile und eines Kompressors zur Auf- bzw. Abregelung des Fahrzeugs verarbeitet wird.

Hierzu werden zu einem ersten Zeitpunkt die Höhenabstandswerte der entsprechenden Luftfedern und die zugehörigen Luftdrücke gemessen und zu einem zweiten, späterem Zeitpunkt erneut die Höhenabstandswerte und gegebenenfalls die Luftdrücke in den entsprechenden Luftfedern ermittelt. Eine Leckage wird dann bei einer Luftfeder erkannt, wenn sich der entsprechende Druck zu dem zweiten Zeitpunkt verringert hat und die der Luftfeder zugehörige Höhe geringer geworden ist.

Eine Schwankung der Druckwerte der in der Anordnung eingeschlossenen Luftmenge aufgrund von Änderungen der Temperatur der Luftmenge wird nicht berücksichtigt, die von Zustandsänderungen der Luft und/oder durch Veränderungen der Umgebungstemperatur verursacht werden können. Daher kann ungerechtfertigt auf eine Leckage einer Luftfeder erkannt werden, wenn sich die Luft in der Luftfeder stark abkühlt. Ferner lässt sich durch eine Erwärmung der Luft ein Druckverlust aufgrund einer Leckage kompensieren. Dadurch wird die Leckage erst dann erkannt, wenn die Kompensation durch die Erwärmung nicht mehr den Druckverlust ausgleichen kann.

Die DE 101 60 972 C1 beschreibt ein Verfahren zur Regelung der Luftmenge in einem geschlossenen, befüll- und entleerbaren pneumatischen Niveauregulierungssystem eines Kraftfahrzeuges. Es ist an dem Fahrzeug ein Temperatursensor zur Messung der Umgebungstemperatur angeordnet, die für die Regelung ausgewertet wird. Aus den Luftdrücken in den einzelnen Komponenten, dem Fahrzeugniveau und der Umgebungstemperatur wird die Luftmasse des Systems errechnet und zur Niveauregelung herangezogen.

Problematisch hierbei ist, dass die Umgebungstemperatur nicht unbedingt der Lufttemperatur in dem System entspricht. Erst durch einen thermischen Übergang der Wärme findet bei einer veränderten Umgebungstemperatur eine Anpassung der Lufttemperatur statt. Zusätzlich unterliegt die in dem System enthaltene Luft aufgrund der Dynamik der Luftfeder einer ständigen Temperaturschwankung.

Es ist daher die Aufgabe der vorliegenden Erfindung, eine zuverlässigere Leckageerkennung in einer Kraftfahrzeug-Luftfederanordnung zu ermöglichen.

Dieser Aufgabe wird durch ein Verfahren mit den Merkmalen gemäß Anspruch 1 sowie eine Vorrichtung mit den Merkmalen gemäß Anspruch 10 gelöst.

Bei einem Verfahren der vorstehend bezeichneten Art ist erfindungsgemäß vorgesehen, dass zu einem ersten Zeitpunkt $t_1$ die Gesamtluftmenge $Q_1$ und zu einem zweiten Zeitpunkt $t_2$ die Gesamtluftmenge $Q_2$ in der Luftfederanordnuna ermittelt werden, die um einen temperaturabhängigen Faktor korrigiert werden, der sich aus dem Erfassen der Temperatur der in der Luftfederanordnung befindlichen Luft ergibt, und die Differenz der temperaturkorrigierten Gesamtluftmengen $Q_1$, $Q_2$ gebildet wird, so dass bei Überschreiten der Differenz um einen bestimmten Grenzwert $Q_{Grenz}$ auf eine Leckage in der Luftfederanordnung erkannt wird.

Bevorzugt werden bei dem Ermitteln der Gesamtluftmengen $Q_1$, $Q_2$ Messwerte mindestens eines Drucksensors und mindestens eines Höhensensors ausgewertet. Aus dem Wert der Höhenmessung ist mit dem bauartlich festgelegten Querschnitt der Luftfeder das der Luftmenge zur Verfügung stehende Volumen bestimmbar.

In einer vorteilhaften Weise werden die Gesamtluftmenge $Q_1$, $Q_2$ der Luftfederanordnung aus der Summe der Luftmengen in den einzelnen Luftfedern und der Luftmenge in einem Luftspeicher und in Luftleitungen ermittelt, die den Luftspeicher mit den Luftfedern verbinden.

Um Fehler durch Niveauregelvorgänge zu vermeiden, werden vorteilhaft bei dem Bilden der Differenz eine von außen der Luftfederanordnung zugeführte Luftmenge $Q_{in}$ und/oder eine in die Umgebung abgegebene Luftmenge $Q_{aus}$ berücksichtigt.

Vorteilhafterweise wird das Verfahren gemäß der Ereindung bei einem Stillstand des Kraftfahrzeugs durchgeführt. Ebenfalls vorteilhaft ist die Durchführung des erfindungsgemäßen Verfahrens, wenn das Kraftfahrzeug verschlossen ist. Auf diese Weise können Messfehler aufgrund der Fahrdynamik oder sich verändernder Beladungszustände vermieden werden.

Eine vorteilhafte Ausgestaltung sieht vor, dass bei Erkennen einer Leckage ein Warnsignal generiert und einem Fahrer des Kraftfahrzeugs übermittelt wird. Dies kann durch eine akustische und/oder visuelle Anzeige im Fahrzeuginneren erfolgen. Der Fahrer wird unmittelbar auf den Zustand der Niveauregelanlage hingewiesen und kann entsprechende sicherheitsrelevante Schritte, beispielsweise eine Verlangsamung der Fahrt, durchführen.

Ebenfalls vorteilhaft vorgesehen ist, dass bei Erkennen einer Leckage eine entsprechende Fehlermeldung in einer Diagnosespeichervorrichtung gespeichert wird, um diesen erkannten Fehler für spätere Analyse- und Reparaturzwecke zur Verfügung zu stellen.

Schließlich sieht eine vorteilhafte Ausführungsform des erfindungsgemäßen Verfahrens vor, dass bei Erkennen einer Leckage die Niveauregeleinrichtung einen Notlauf auslöst, der das Kraftfahrzeug in eine fahrdynamisch unkritische Niveaulage überführt.

Ein Vorrichtung zur Durchführung des Verfahrens gemäß der vorliegenden Erfindung weist neben einer Kraftfahrzeug-Luftfederanordnung mit einer Niveauregeleinrichtung, die eine oder mehrere Luftfedern, Einrichtungen zum Ermitteln der Gesamtluftmenge in der Luftfederanordnung und Einrichtungen zum Temperaturerfassen aufweist, weiterhin eine Auswerte-/Steuereinrichtung auf, die ausgebildet ist, aus zwei zu verschiedenen Zeitpunkten ermittelten und um einen temperaturabhängigen Faktor, der sich aus dem Erfassen der Temperatur der in der Luftfederanordnung befindlichen Luft ergibt, korrigierten Gesamtluftmengen eine Differenz zu bilden und bei Überschreiten der Differenz um einen bestimmten Grenzwert auf eine Leckage in der Luftfederanordnung zu erkennen.

Nachfolgend wird die Erfindung anhand der detaillierten Beschreibung unter Bezug auf die beigefügten Zeichnungen beispielhaft näher erläutert, in denen:

Figur 1 -    eine Prinzipdarstellung einer Kraftfahrzeug-Luftfederanord-nung zeigt; und

Figur 2 -    ein schematisches Blockschaltbild zur Steuerung eines Ausführungsbeispiels zeigt.

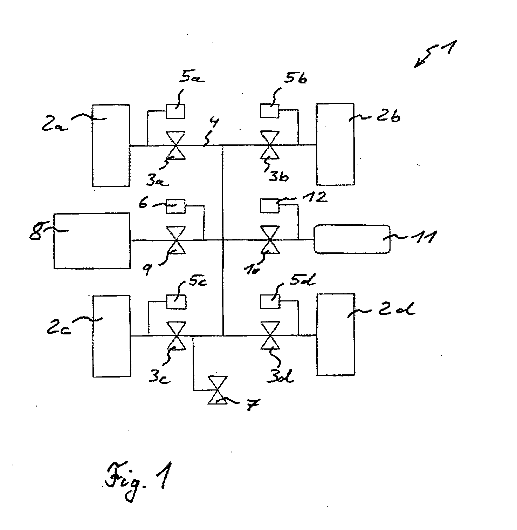

Figur 1 zeigt in einer Prinzipskizze eine Kraftfahrzeug-Luftfederanord-nung 1, die insgesamt vier Luftfedern 2a, 2b, 2c, 2d aufweist, die den vier Kraftfahrzeugrädern zur Abstützung, des Kraftfahrzeugrahmens zugeordnet sind. Es ist klar, dass die Anzahl der Luftfedern 2a, 2b, 2c, 2d nur beispielhaft ausgewählt ist und eine beliebige andere sein kann.

Ebenso kann das Verfahren auch auf andere pneumatische Versorgungssysteme, beispielsweise ein geschlossenes Versorgungssystem angewendet werden.

Die einzelnen Luftfedern 2a, 2b, 2c, 2d sind über jeweils ein Sperrventil 3a, 3b, 3c, 3d mit einem Druckleitungssystem 4 verbunden. Jeder der Luftfedern 2a, 2b, 2c, 2d ist ein Drucksensor 5a, 5b, 5c, 5d zugeordnet, um den Luftdruck innerhalb der jeweiligen Luftfeder 2a, 2b, 2c, 2d zu ermitteln. Ferner ist jeder Luftfeder 2a, 2b, 2c, 2d ein Höhensensor (nicht dargestellt) zugeordnet, deren Signale von einer (nicht dargestellten) Niveauregeleinrichtung ausgewertet werden.

An dem Druckleitungssystem 4 ist ebenfalls ein Drucksensor 6 zur Messung des in dem Druckleitungssystem 4 vorhandenen Luftdruckes angeordnet. Ferner ist an dem Druckleitungssystem 4 ein Ablassventil 7 vorgesehen, um Luft aus der Luftfederanordnung 1 in die Umgebung abzugeben. Um der Luftfederanordnung 1 Luft aus der Umgebung zuzuführen, ist ein Kompressor 8 vorgesehen, der über ein Kompressorventil 9 an dem Druckleitungssystem 4 angeschlossen ist. Schließlich weist die Luftfederanordnung 1 einen über ein Sperrventil, das als Speicherventil 10 bezeichnet ist, angeschlossenen Druckluftspeicher 11 auf, dessen Innendruck über einen Speicherdrucksensor 12 ermittelt werden kann.

Das Gesamtvolumen der Luftfederanordnung setzt sich somit aus den Teilvolumina der einzelnen Luftfedern 2a, 2b, 2c, 2d, dem Druckluftspeicher 11 und dem Druckleitungssystem 4 zusammen. Jedem dieser Teilvolumina ist ein Druckluftsensor 5a, 5b, 5c, 5d, 6, 12 zur Ermittlung des Luftdruckes in diesem Teilvolumen zugeordnet.

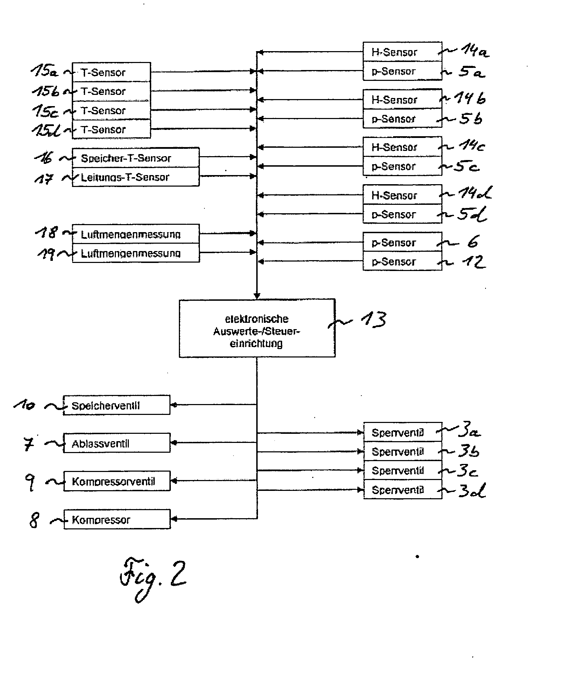

Figur 2 zeigt ein schematisches Blockschaltbild zur Steuerung eines ersten Ausführungsbeispiels der erfindungsgemäßen Luftfederanordnung 1 aus Figur 1. Ein wesentliches Element ist eine elektronische Auswerte-/Steuereinrichtung 13, die Signale von den im System verteilten Sensoren empfängt und auswertet. Entsprechend der Auswertung steuert die elektronische Steuereinrichtung 13 die Vielzahl der Ventile und den Kompressor 8.

Von jeder der Luftfedern 2a, 2b, 2c, 2d (Figur 1) empfängt die elektronische Steuereinrichtung 13 einen von den zugeordneten Drucksensoren 5a, 5b, 5c 5d ermittelten Druckwert und jeweils ein Signal eines jeder Luftfeder 2a, 2b, 2c, 2d zugeordneten Höhensensors 14a, 14b, 14c, 14d. Aus den Signalen der Höhensensoren 14a, 14b, 14c, 14d und aus den bauartig festgelegten Querschnitt der Luftfedern 2a, 2b, 2c, 2d kann die elektronische Steuereinrichtung 13 die Volumina der Luftfedern 2a, 2b, 2c, 2d bestimmen. Die Volumina der Druckluftleitung 4 und des Druckspeichers 11 sind ebenfalls durch den Aufbau festgelegt und nicht veränderlich.

Für eine gegebene, ideale Gasmenge ist das Produkt aus Volumen und Druck konstant bei einer gleich bleibenden Temperatur (Gesetz von Boyle-Marriotte). Weiterhin gilt für eine gegebene Gasmenge bei einem konstanten Volumen, dass der Quotient aus Druck und Temperatur gleich bleibt (Gesetz von Gay-Lussac). Beide Gesetze sind Sonderfälle der Zustandsgleichung der idealen Gase und lassen sich für zwei Zustände folgendermaßen zusammenfassen:

$$\frac{p_1 \cdot V_1}{T_1} = \frac{p_2 \cdot V_2}{T_2} \, .$$

Diese Beziehung gilt nur näherungsweise für das reale Gas Luft. Dies kann aber vernachlässigt werden, da die Abweichung in der Größenordnung der Messgenauigkeit liegt. Da für die Luftmengen gilt:

$$Q_1 \sim \frac{p_1 \cdot V_1}{T_1}$$

$$Q_2 \sim \frac{p_2 \cdot V_2}{T_2} \, ,$$

lässt sich eine Leckage der Komponenten Luftfeder, Speicher oder Leitung erkennen, wenn folgende Gleichung erfüllt ist:

$$\left( \frac{p_1 \cdot V_1}{T_1} \right) - \left( \frac{p_2 \cdot V_2}{T_2} \right) \geq Q_{Grenz} \, .$$

Da sich die Gesamtluftmenge aus der Summe der Teilluftmengen ergibt, gilt folgende Bedingung für die Leckageerkennung:

$$\frac{p_{1a} \cdot V_{1a}}{T_{1a}} + \frac{p_{1b} \cdot V_{1b}}{T_{1b}} + \frac{p_{1c} \cdot V_{1c}}{T_{1c}} + \frac{p_{1d} \cdot V_{1d}}{T_{1d}}$$

$$+ \frac{p_{1Speicher} \cdot V_{1Speicher}}{T_{1Speicher}} + \frac{p_{1Leitung} \cdot V_{1Leitung}}{T_{1Leitung}}$$

$$- \frac{p_{2a} \cdot V_{2a}}{T_{2a}} - \frac{p_{2b} \cdot V_{2b}}{T_{2b}} - \frac{p_{2c} \cdot V_{2c}}{T_{2c}} - \frac{p_{2d} \cdot V_{2d}}{T_{2d}}$$

$$- \frac{p_{2Speicher} \cdot V_{2Speicher}}{T_{2Speicher}} - \frac{p_{2Leitung} \cdot V_{2Leitung}}{T_{2Leitung}} \qquad \geq Q_{Grenz}$$

Um erfindungsgemäß eine Leckage in der Luftfederanordnung 1 (Figur 1) zu erkennen, wertet die elektronische Auswerte-/Steuereinrichtung 13 zusätzlich Temperatursignale aus, die von den einzelnen Luftfedern 2a, 2b, 2c, 2d zugeordneten Temperatursensoren 15a, 15b, b, 15c, 15d, ein dem Druckluftspeicher 11 zugeordneten Speichertemperatursensor 16 und einem dem Druckleitungssystem 4 zugeordneten Leitungstemperatursensor 17 erhält. Jedem der Teilvolumina der Luftfederanordnung 1 sind somit Sensorwerte zur Ermittlung der aktuellen Temperatur und des aktuellen Volumens zugeordnet.

Die elektronische Auswerte-/Steuereinrichtung 13 ermittelt nun zu einem ersten Zeitpunkt $t_1$ für jedes Teilvolumen die Luftmenge, die sich aus den Sensorwerten anhand der vorstehenden Beziehungen herleiten lässt. Die Teilluftmengen ergeben in der Summe die Gesamtluftmenge $Q_1$ der Luftfederanordnung 1 zu dem Zeitpunkt $t_1$. Zu einem zweiten, späteren Zeitpunkt $t_2$ wird erneut die Gesamtluftmenge $Q_2$ ermittelt. Überschreitet die Differenz der Gesamtluftmenge $Q_1$ zum Zeitpunkt $t_1$ und der Gesamtluftmenge $Q_2$ zum Zeitpunkt $t_2$ einen vorgegebenen Grenzwert $Q_{Grenz}$, wird eine Leckage in der Luftfederanordnung 1 erkannt.

Alternativ kann bei Überschreiten der Differenz ein Zähler hoch gezählt werden, so dass erst bei zumindest einem weiteren Überschreiten eines Zählergrenzwertes durch den Zählerwert eine Leckage erkannt wird. Der Abstand zwischen den beiden Zeitpunkten $t_1$, $t_2$ liegt typischerweise zwischen 5 Minuten bis zu 5 Stunden.

Idealerweise funktioniert die vorstehend beschriebene Leckageerkennung zuverlässig, wenn die in der Luftfederanordnung 1 eingeschlossene Luftmenge nicht gezielt durch ein Ablassen in die Umgebung oder ein Zuführen mittels des Kompressors 8 verändert wurde. Um eine Leckageerkennung aber auch bei einer gewünschten Veränderung der eingeschlossenen Gesamtluftmenge zu ermöglichen, werden zusätzlich die abgegebene Luftmenge $Q_{aus}$ und/oder die neu hinzugeführte Luftmange $Q_{in}$ bei der Differenzbildung berücksichtigt. Es gilt dann folgende Bedingung für eine Leckageerkennung:

$$\left( \frac{p_1 \cdot V_1}{T_1} \right) - \left( \frac{p_2 \cdot V_2}{T_2} \right) - Q_{in} + Q_{aus} \geq Q_{Grenz}$$

Um die Luftmengen $Q_{in}$ und $Q_{aus}$ bei der Differenzbildung berücksichtigen zu können, müssen sie geeignet bestimmt werden. Dies kann beispielsweise durch entsprechende Durchflussmessgeräte oder andere geeignete Sensoren erfolgen. Folglich sind in dem Blockschaltbild eine Luftmengenmesseinrichtung 18 für die Luftmenge $Q_{aus}$ und eine Luftmengenmesseinrichtung 19 für die Luftmenge $Q_{in}$ vorgesehen.

Wenn zwischen den beiden Zeitpunkten t1 und t2 ein Sperrventil 3a, 3b, 3c, 3d nicht geöffnet wurde, also ein Luftaustausch zwischen der Luftfeder 2a, 2b, 2c, 2d mit dem Druckleitungssystem nicht stattgefunden hat, kann für diese einzelne Luftfeder 2a, 2b, 2c, 2d eine Leckageüberprüfung durchgeführt werden. Auf diese Weise ist es möglich, eine Leckage in der Luftfederanordnung 1 einer bestimmten Luftfeder 2a, 2b, 2c, 2d zuzuordnen.

Messfehler der Temperaturerfassung können vermieden werden, wenn das Kraftfahrzeug keinen kurzzeitigen Schwankungen der Umgebungstemperatur ausgesetzt ist und Temperaturschwankungen innerhalb der Luftfedern 2a, 2b, 2c, 2d durch einen Stillstand des Fahrzeugs vermieden werden. Aufgrund der temperaturabhängig korrigierten Differenz der Gesamtluftmengen $Q_1$, $Q_2$ kann eine Leckage erkannt und beispielsweise über eine Diagnoseschnittstelle dem Fahrzeugführer bzw. Werkstattpersonal weitergeleitet werden.

Weiterhin kann zur Einsparung der Drucksensoren eine Vorrichtung mit einem Drucksensor 6 eingesetzt werden. Die Drücke in den einzelnen Komponenten können dann durch Öffnen des zugehörigen Ventils ermittelt werden. Für die Bestimmung der Gesamtluftmenge müssen dann nacheinander die Luftmengenvolumina durch Schalten der entsprechenden Ventile ermittelt werden.

**Patentansprüche**

1. Verfahren zur Erkennung von Leckagen in einer Kraftfahrzeug-Luftfederanordnung mit einer Niveauregeleinrichtung, die eine oder mehrere Luftfedern, Einrichtungen zum Ermitteln der Gesamtluftmenge in der Luftfederanordnung und Einrichtungen zum Temperaturerfassen aufweist, **dadurch gekennzeichnet, dass** zu einem ersten Zeitpunkt $t_1$ die Gesamtluftmenge $Q_1$ und zu einem zweiten Zeitpunkt $t_2$ die Gesamtluftmenge $Q_2$ in der Luftfederanordnung ermittelt werden, die um einen temperaturabhängigen Faktor korrigiert werden, der sich aus dem Erfassen der Temperatur der in der Luftfederanordnung befindlichen Luft ergibt, und die Differenz der temperaturkorrigierten Gesamtluftmengen $Q_1$, $Q_2$ gebildet wird, so dass bei Überschreiten der Differenz um einen bestimmten Grenzwert $Q_{Grenz}$ auf eine Leckage in der Luftfederanordnung erkannt wird.

2. Verfahren nach Anspruch 1, **dadurch gekennzeichnet, dass** bei dem Ermitteln der Gesamtluftmengen $Q_1$, $Q_2$ Messwerte mindestens eines Drucksensors und mindestens eines Höhensensors ausgewertet werden.

3. Verfahren nach Anspruch 1 oder 2, **dadurch gekennzeichnet, dass** die Gesamtluftmengen $Q_1$, $Q_2$ der Luftfederanordnung aus der Summe der Luftmengen in den einzelnen Luftfedern und der Luftmenge in einen Luftspeicher und in Luftleitungen ermittelt werden, die den Luftspeicher mit den Luftfedern verbinden.

**4.** Verfahren nach einem der vorstehenden Ansprüche, **dadurch gekennzeichnet, dass** bei dem Bilden der Differenz zusätzlich eine von außen der Luftfederanordnung zugeführte Luftmenge $Q_{in}$ und/oder eine in die Umgebung abgegebene Luftmenge $Q_{aus}$ berücksichtigt werden.

**5.** Verfahren nach einem der vorstehenden Ansprüche, **dadurch gekennzeichnet, dass** das Verfahren bei einem Stillstand des Kraftfahrzeugs durchgeführt wird.

**6.** Verfahren nach einem der vorstehenden Ansprüche, **dadurch gekennzeichnet, dass** das Verfahren durchgeführt wird, wenn das Kraftfahrzeug verschlossen ist.

**7.** Verfahren nach einem der vorstehenden Ansprüche, **dadurch gekennzeichnet, dass** bei Erkennen einer Leckage ein Warnsignal generiert und einem Fahrer des Kraftfahrzeugs übermittelt wird.

**8.** Verfahren nach einem der vorstehenden Ansprüche, **dadurch gekennzeichnet, dass** bei Erkennen einer Leckage eine entsprechende Fehlermeldung in einer Diagnosespeichervorrichtung gespeichert wird.

**9.** Verfahren nach einem der vorstehenden Ansprüche, **dadurch gekennzeichnet, dass** bei Erkennen einer Leckage die Niveauregeleinrichtung einen Notlauf auslöst, der das Kraftfahrzeug in eine fahrdynamisch unkritische Niveaulage überführt.

**10.** Vorrichtung zur Durchführung des Verfahrens nach einem der Ansprüche 1 bis 9 mit einer Kraftfahrzeug-Luftfederanordnung (1) mit einer Niveauregeleinrichtung, die mehrere Luftfedern (2a, 2b, 2c, 2d), Einrichtungen (5a, 5b, 5c, 5d, 6, 12, 14a, 14b, 14c, 14d) zum Ermitteln der Gesamtluftmenge in der Luftfederanordnung (1) und Einrichtungen (15a, 15b, 15c, 15d, 16, 17) zum Temperaturerfassen aufweist, **gekennzeichnet durch** eine Auswerte-/ Steuereinrichtung (13), die ausgebildet ist, aus zwei zu verschiedenen Zeitpunkten $t_1$, $t_2$ ermittelten und um einen temperaturabhängigen Faktor, der sich aus dem Erfassen der Temperatur der in der Luftfederanordnung befindlichen Luft ergibt, korrigierten Gesamtluftmengen $Q_1$, $Q_2$ eine Differenz zu bilden und bei Überschreiten der Differenz um einen bestimmten Grenzwert $Q_{Grenz}$ auf eine Leckage in der Luftfederanordnung (1) zu erkennen.

## Claims

**1.** Method for detecting leaks in a motor vehicle air spring arrangement comprising a level control device that has one or more air springs, devices for determining the total air quantity in the air spring arrangement, and devices for sensing temperature, **characterized in that** the total air quantity $Q_1$ in the air spring arrangement is determined at a first instant $t_1$ and the total air quantity $Q_2$ in the air spring arrangement is determined at a second instant $t_2$, these quantities being corrected by a temperature dependent factor that results from sensing of the temperature of the air present in the air spring arrangement, and the difference between the temperature corrected total air quantities $Q_1$, $Q_2$ is formed such that a leak in the air spring arrangement is identified upon overshooting of the difference by a specific limiting value $Q_{Grenz}$ .

**2.** Method according to Claim 1, **characterized in that** measured values of at least one pressure sensor and at least one height sensor are evaluated when determining the total air quantities $Q_1$, $Q_2$.

**3.** Method according to Claim 1 or 2, **characterized in that** the total air quantities $Q_1$, $Q_2$ of the air spring arrangement are determined from the sum of the air quantities in the individual air springs and the air quantity in an air chamber and in air lines that connect the air chamber to the air springs.

**4.** Method according to one of the preceding claims, **characterized in that** when forming the difference consideration is additionally given to an air quantity $Q_{in}$ fed from outside to the air spring arrangement and/or to an air quantity $Q_{aus}$ released into the surroundings.

**5.** Method according to one of the preceding claims, **characterized in that** the method is carried out with the vehicle stationary.

**6.** Method according to one of the preceding claims, **characterized in that** the method is carried out when the motor vehicle is closed.

7.  Method according to one of the preceding claims, **characterized in that** upon detection of a leak a warning signal is generated and transferred to a driver of the motor vehicle.

8.  Method according to one of the preceding claims, **characterized in that** upon detection of a leak an appropriate fault message is stored in a diagnosis storage device.

9.  Method according to one of the preceding claims, **characterized in that** upon detection of a leak the level control device initiates an emergency run that transfers the motor vehicle to a level position uncritical for the driving dynamics.

10. Device for carrying out the method according to one of Claims 1 to 9 with the aid of a motor vehicle air spring arrangement (1) comprising a level control device that has a number of air springs (2a, 2b, 2c, 2d), devices (5a, 5b, 5c, 5d, 6, 12, 14a, 14b, 14c, 14d) for determining the total air quantity in the air spring arrangement (1), and devices (15a, 15b, 15c, 15d, 16, 17) for sensing temperature, **characterized by** an evaluation/control device (13) that is designed to form a difference from two total air quantities $Q_1$, $Q_2$ determined at different instants $t_1$, $t_2$ and corrected by a temperature dependent factor that results from the sensing of the temperature of the air present in the air spring arrangement, and to identify a leak in the air spring arrangement (1) upon overshooting of the difference by a specific limiting value $Q_{Grenz}$.

**Revendications**

1.  Procédé de détection de fuites dans un système d'amortissement pneumatique d'un véhicule comportant un dispositif de régulation de niveau, qui présente un ou plusieurs amortisseurs pneumatiques, des dispositifs pour déterminer la quantité d'air totale dans le système d'amortissement pneumatique et des dispositifs de détection de température, **caractérisé en ce qu'**à un premier point temporel $t_1$ la quantité d'air totale $Q_1$ et à un deuxième point temporel $t_2$ la quantité d'air totale $Q_2$ dans le système d'amortissement pneumatique sont déterminées, lesquelles sont corrigées par un facteur fonction de la température, qui résulte de la détection de la température dans l'air se trouvant dans le système d'amortissement pneumatique, et la différence entre les quantités d'air totales $Q_1$, $Q_2$ corrigées en température est formée, de telle sorte que lorsque la différence est dépassée d'une valeur limite déterminée $Q_{Grenz}$, une fuite dans le système d'amortissement pneumatique est détectée.

2.  Procédé selon la revendication 1, **caractérisé en ce que** lors de la détection des quantités d'air totales $Q_1$, $Q_2$, des valeurs de mesure d'au moins un capteur de pression et d'au moins un capteur de hauteur sont évaluées.

3.  Procédé selon la revendication 1 ou 2, **caractérisé en ce que** les quantités d'air totales $Q_1$, $Q_2$ du système d'amortissement pneumatique sont déterminées à partir de la somme des quantités d'air dans les amortisseurs pneumatiques individuels et de la quantité d'air dans un accumulateur d'air et dans des conduites d'air, qui relient l'accumulateur d'air aux amortisseurs pneumatiques.

4.  Procédé selon une des revendications précédentes, **caractérisé en ce que** lors de la formation de la différence, on tient en outre compte de la quantité d'air $Q_{in}$ alimentée de l'extérieur du système d'amortissement pneumatique et/ou d'une quantité d'air $Q_{aus}$ rejetée dans l'environnement ambiant.

5.  Procédé selon une des revendications précédentes, **caractérisé en ce que** le procédé est mis en oeuvre lors d'un arrêt du véhicule.

6.  Procédé selon une des revendications précédentes, **caractérisé en ce que** le procédé est mis en oeuvre quand le véhicule est fermé.

7.  Procédé selon une des revendications précédentes, **caractérisé en ce que**, lors de la détection d'une fuite, un signal d'alarme est généré et transmis à un conducteur du véhicule.

8.  Procédé selon une des revendications précédentes, **caractérisé en ce que**, lors de la détection d'une fuite, un rapport d'erreur correspondant est mémorisé dans un dispositif de mémorisation de diagnostics.

9.  Procédé selon une des revendications précédentes, **caractérisé en ce que**, lors de la détection d'une fuite, le dispositif de régulation de niveau déclenche un fonctionnement de secours, qui fait passer le véhicule à un niveau non critique en termes de dynamique de conduite.

**10.** Dispositif pour mettre en oeuvre le procédé selon une des revendications 1 à 9 comportant un système d'amortissement pneumatique d'un véhicule (1) avec un dispositif de régulation de niveau, qui présente plusieurs amortisseurs pneumatiques (2a,2b,2c,2d), des dispositifs (5a,5b,5c,5d,6,12,14a,14b,14c,14d) pour déterminer la quantité d'air totale dans le système d'amortissement pneumatique (1) et des dispositifs (15a,15b,15c,15d,16,17) de détection de température, **caractérisé par** un dispositif d'évaluation/commande (13), qui est conçu afin de former une différence à partir de deux quantités d'air totales $Q_1$, $Q_2$ déterminées à des points temporels différents $t_1$, $t_2$ et corrigées par un facteur fonction de la température, qui résulte de la détection de la température de l'air se trouvant dans le système d'amortissement pneumatique et de détecter une fuite dans le système d'amortissement pneumatique (1), quand la différence est dépassée d'une valeur limite $Q_{Grenz}$ déterminée.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4003781 A1
- DE 10300737 A1
- DE 10160972 C1